# FASCICULE DE BREVET EUROPEEN

(11) **EP 2 835 357 B1**
(45) Date de publication et mention de la délivrance du brevet: **07.12.2016**
(21) Numéro de dépôt: 14003436.4
(22) Date de dépôt: 28.10.2011
(51) Int. Cl.: C02F 1/54, C02F 11/14, B01D 21/01, B01D 21/02, B01D 21/28, C02F 1/20, C02F 1/74, C02F 11/12

(54) **Procede de separation entre liquide et matiere en suspension d'une boue et galette de boue solidifiée**
Verfahren zur Trennung von Flüssigkeit und Schwebstoff in einem Schlamm und Schlammkuchen
Method for separating a liquid and a suspended material of a sludge and sludge cake

(30) Priorité: 29.10.2010 FR 1004284
(43) Date de publication de la demande: 11.02.2015
(62) Demande divisionnaire de: 11787699.5
(73) Titulaire: OREGE, 78350 Jouy-en-Josas (FR)
(72) Inventeur: Capeau, Patrice, 13013 MARSEILLE (FR); Lopez, Michel, F-11110 Coursan (FR); Gendrot, Pascal, F-78350 Jouy en Josas (FR)
(74) Mandataire: Benech, Frédéric

(56) Documents cités:
- EP-A1- 0 040 887
- WO-A1-00/13811
- FR-A1- 2 175 897
- JP-A- 2000 354 900
- US-A- 4 929 341
- US-A- 5 373 646

## Description

La présente invention concerne un procédé de séparation entre la partie liquide et les matières en suspension d'une boue alimentée en flux continu à un débit Q_{EB} = V/heure.

Elle permet ainsi d'éliminer quasiment la totalité des matières en suspension pour les descendre en dessous d'un seuil déterminé.

Elle trouve une application particulièrement importante, bien que non exclusive, dans le domaine de la déshydratation des boues et de la clarification des eaux.

Elle résulte de façon surprenante de l'utilisation d'une très forte énergie dans un milieu liquide et boueux qui va permettre notamment d'attaquer les structures colloïdales à l'intérieur d'un tel effluent.

Des colloïdes sont en effet présents dans les boues solides (dans leur fraction organique), mais également dans les eaux.

Ce sont notamment ces colloïdes qui donnent une coloration trouble et rendent difficile la séparation entre phases liquide et solide et la décoloration de certaines eaux.

On connaît des procédés de séparation de matière solide en suspension, de l'effluent liquide dans lequel elle se trouve.

Les techniques qui existent d'extraction de l'eau hors des boues sont essentiellement le compactage qui augmente la teneur (en % en poids du mélange total), en composé solide de l'ordre de 5%, la centrifugation ou la filtration qui augmentent l'une et l'autre la teneur en composé solide de 18 à 25%, et enfin le séchage (par combustion ou épandage pendant plusieurs semaines) qui augmente la teneur en composé solide de 90 à 95%, et ce en sachant que la teneur en poids de composé solide des boues d'épuration avant le traitement est en général comprise entre 0,1 à 1% du poids total de l'effluent.

Tous ces traitements connus de l'art antérieur présentent des inconvénients, soit liés au fait que la dessiccation n'est pas suffisante (compactage, centrifugation, filtration) soit liés au temps de traitement (séchage) ou à la consommation importante d'énergie (combustion).

On connaît également (FR 2 175 897) un procédé de traitement des déchets de boues où on alimente un circuit étanche comprenant une cuve, circuit dans lequel on recircule pendant plusieurs dizaines de minutes en introduisant un gaz contenant de l'oxygène dans le circuit en amont de la cuve.

La rétention de la boue activée dans la cuve pendant une période de temps suffisante pour permettre la sursaturation par le gaz contenant de l'oxygène est indiquée comme permettant l'élimination de façon importante des solides en suspension.

Un tel procédé, outre qu'il est long, met en oeuvre un dispositif assez compliqué, source de nombreux colmatages.

On connait également (EP 0 040 887) une méthode de traitement dans lequel on pressurise la boue de sorte que le gaz est absorbé dans la boue qui passe ensuite dans une suite où elle est brusquement: dépressurisée de sorte que l'air absorbé est brusquement libéré de façon semi-explosive.

La présente invention vise à fournir un procédé répondant mieux que ceux antérieurement connus aux exigences de la pratique, notamment en ce qu'elle va permettre l'obtention d'une déshydratation poussée bien supérieure à celle obtenue avec les techniques existantes, qu'il soit mis en oeuvre seul ou en combinaison avec de telles techniques, et ce de façon très rapide, l'utilisation du procédé selon l'invention ne nécessitant que quelques secondes avant l'obtention d'un résultat.

En particulier, ce procédé permet d'obtenir d'excellents résultats seul pour des boues très minéralisées (c'est à dire présentant un % de matière organique sur 100% en poids de matière sèche inférieur à de 5 à 15%).

Avec des boues moins minéralisées, il est possible d'obtenir un rendement optimisé lorsqu'il est combiné avec un outil de séparation complémentaire disposé en aval du dispositif (filtre à bande ou centrifugation), améliorant de plus de 10% la dessiccation, par exemple de 25%.

Les installations existantes peuvent ainsi être facilement améliorées en rajoutant un ou plusieurs réacteurs mettant en oeuvre l'invention, ce qui va ensuite et par exemple économiser sur les coûts de transport et d'incinération finale des boues.

Elle présente par ailleurs une très faible consommation électrique et utilise peu de matière consommable (air comprimé, additif).

De plus, le procédé met en oeuvre un dispositif simple de très faible encombrement, facilement transportable, qui va donc pouvoir être installé sur des sites peu accessibles.

Avec l'invention un fonctionnement en continu est possible, et ce avec des contraintes d'exploitation peu exigeantes.

Le traitement selon l'invention ne génère par ailleurs aucune pollution tout en mettant en oeuvre une technique en elle-même beaucoup plus économique que celles connues dans le domaine de la séparation liquide/solide (centrifugeuse, filtre presse, filtre bande, recirculation oxygénée continue, etc).

Enfin avec l'invention on obtient de façon étonnante un gâteau poreux et déshydraté de type nouveau constituant un résidu utilisable.

Dans ce but, l'invention propose notamment un procédé de séparation entre la partie liquide et les matières en suspension d'une boue alimentées en flux continu à un débit Q_{EB} - V/heure, conforme à la revendication 1.

L'enceinte fermée est alimentée et évacuée en continu au même débit ou sensiblement au même débit d'entrée et de sortie en continu de l'effluent.

Elle constitue donc un accident en ligne du flux traité sans recirculation en boucle des effluents à l'intérieur de l'enceinte.

Avantageusement, dans le cas d'une décantation, la partie solide ou gâteau tombe en partie basse du récipient en se séparant de la partie liquide que l'on vide en continu.

Par enceinte fermée, on entend une cuve ou un réacteur de volume clos déterminé comprenant cependant et bien entendu les moyens d'entrée du flux continu, et des moyens de sortie (en général une tubulure) dudit flux continu une fois traité, au même débit ou sensiblement au même débit.

L'enceinte est donc une enceinte de passage du flux en pression.

Par une valeur v < V/20 on entend une valeur inférieure ou à peu près inférieure, avec une tolérance de l'ordre de ± 10% à 20%.

Avantageusement v ≤ V/25 ou ≤ V/30.

Dans un mode de réalisation avantageux de l'invention on atteint notamment les excellents résultats grâce au cumul de plusieurs fonctions dans la même enceinte de petite taille en ménageant quatre zones fonctionnelles.

Une zone d'introduction d'air légèrement compressé, zone où se déroule aussi une mise en suspension ou une prévention de la décantation des particules les plus lourdes, néanmoins capables de monter dans le réacteur et de sortir en partie haute avec les particules les plus fines.

Une zone de chocs hydrauliques ou s'effectue l'introduction des flux liquides.

Une zone de montée du lit constituée, pour une quantité en poids d'environ 1 de gaz, de 0,1 d'eau et de 0,01 de solide. Dans cette zone un très fort brassage est rendu possible par l'apport d'air de la qualité préconisée (débit et pression).

Une zone de décompression par exemple réglée par une vanne située en partie haute du réacteur. Dans l'exemple de cette vanne celle-ci doit permettre de maintenir le réacteur à une pression relative de 0,5 à 2 bars environ.

Dans des modes de réalisation avantageux, on a de plus recours à l'une et/ou à l'autre des dispositions suivantes :
- on injecte le flux dans l'enceinte de volume v < V/20 par deux orifices identiques opposés en vis à vis situés dans la moitié inférieure de ladite enceinte, l'air étant injecté en dessous desdits orifices et on évacue en continu ou par intermittence le flux en partie haute, par exemple par le biais d'une soupape de surpression déclenchant au dessus d'une valeur seuil déterminée ;
- l'air est injecté avec un débit d > 1,5 Q_{EB}, par exemple supérieur à 5 Q_{EB}, à 10 Q_{EB} ou compris entre 1,5 fois et 15 fois Q_{EB} ;
- l'air est injecté à pression moyenne. Par pression moyenne on entend compris entre 1,4 bar et 2,5 bars, avantageusement entre 1,6 bar et 1,9 bar. Une telle pression génère de plus grosses bulles qui vont être à même de mieux pénétrer le milieu en se répartissant de façon aléatoire dans l'enceinte.
- le récipient de récupération est vidé en permanence par trop plein ;
- v ≤ V/50 ;
- v ≤ V/100 ;
- le débit Q_{EB} est supérieur ou égal à 15 m3/h, le débit d est supérieur ou égal à 25 Nm3/h et la pression relative dans l'enceinte est supérieure ou égale à 0,8 bar ;
- le débit Q_{EB} est supérieur ou égal à 20 m3/h, le débit d est supérieur ou égal à 50 Nm3/h et la pression relative dans l'enceinte est supérieure à 1,2 bar ;
- on ajoute au moins un réactif liquide en continu à un débit q à l'intérieur de l'enceinte ;
- le réactif est ajouté dans des proportions comprises entre 0,05 % et 0,1 % du taux de matière sèche contenue dans la boue. Par taux de matière sèche on entend le % en poids de solide sur le % en poids total de l'effluent ;
- le réactif liquide est un floculant organique de type cationique ;
- on dégaze les effluents en sortie de l'enceinte et on utilise les gaz obtenus pour alimenter l'injection d'air en partie basse ;
- le gâteau obtenu est récupéré et déshydraté par séchage, pressage ou centrifugeage pour obtenir une galette solidifiée.

Le procédé selon l'invention est défini par les revendications annexées.
Il sera mieux compris à la lecture de la description qui suit à titre d'exemple. La description se réfère aux dessins qui l'accompagnent dans lesquels :
- La figure 1 est un schéma de principe illustrant un procédé de traitement.
- La figure 2 est un schéma de fonctionnement d'un dispositif selon un mode de réalisation n'étant pas défini pas les revendications.
- La figure 3 est une vue illustrant schématiquement la transformation d'une boue en utilisant un dispositif selon un mode de réalisation utilisable avec l'invention.

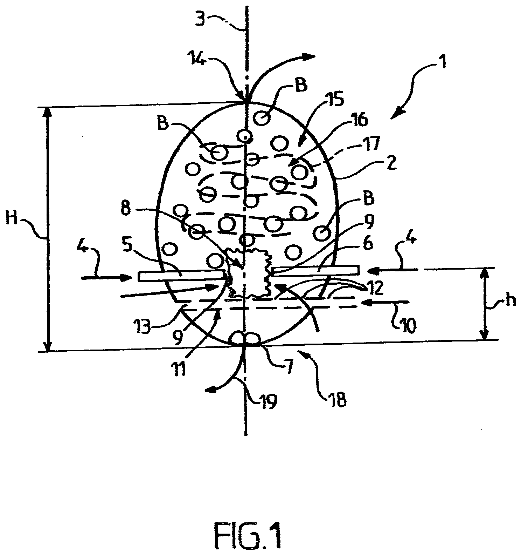

La figure 1 montre les principes du procédé de séparation entre liquide et solide d'une boue, selon le mode de réalisation de l'invention plus particulièrement décrit ici.

Dans un réacteur 1 formé d'une enceinte 2, oblongue, s'allongeant autour d'un axe 3, de petit volume v par exemple de l'ordre de 50 litres, on injecte les effluents (flèches 4) par deux piquages opposés 5, 6, symétriques par rapport à l'axe 3 de l'enceinte.

Les piquages sont situés en partie basse de l'enceinte, par exemple à une distance h du fond 7 de l'enceinte comprise entre le cinquième et le tiers de la hauteur H de l'enceinte.

Ces deux piquages situés en vis à vis l'un de l'autre permettent une alimentation en pression du flux d'eau très chargé en matière sèche (MS), (par exemple τ de MS 10%/poids total) ce qui entraîne un choc important au niveau de la rencontre des deux flux dans la zone 8.

En d'autres termes, le pompage des eaux de l'extérieur (non représenté) introduites dans l'enceinte du réacteur 1 de petite taille, par les deux piquages en face à face permet un choc entre les flux dans la zone 8 du fait de la pression de sortie de la ou des pompes d'alimentation (non représentées), qui dépend de la hauteur d'eau desdites pompes d'alimentation en amont des piquages et des pertes de charges du circuit.

Classiquement, en utilisant des pompes industrielles du commerce et un circuit sans trop d'accidents, une pression de 2 bar en sortie 9 des piquages dans l'enceinte est aisément atteignable.

L'énergie cinétique de pompage est alors transformée en énergie de choc, maximisée en augmentant la vitesse d'introduction dans l'enceinte pour la sortie des piquages des ajustages 9 de dimensions réduites, mais compatibles avec la granulométrie maximum de la boue.

Par ailleurs, et selon le mode de réalisation de l'invention plus particulièrement décrit ici on introduit une quantité d'air surpressé (flèche 10) en dessous de la zone 8.

Par surpressé on entend une légère surpression qui peut être comprise entre 0,1 bar relatif et 1 bar relatif par rapport à la pression atmosphérique, par exemple 0,8 bar relatif.

Cette introduction d'air se fait par une rampe 11 de répartition de l'air, par exemple une rampe formée par un tuyau circulaire, en serpentin ou longiligne, permettant d'amener des bulles d'air de façon répartie sur la surface de l'enceinte, par des orifices 12, répartis le long dudit tuyau 13.

L'air peut également être amené par un piquage en partie basse.

La rampe est située en dessous de la rencontre des effluents en zone 8, par exemple entre le dixième et le cinquième de la hauteur H de l'enceinte, et génère de grosses bulles B, par exemple des bulles de diamètre compris entre 1 mm et 1 cm.

Cette introduction d'air augmente le niveau énergétique de l'enceinte, en surpression par rapport à sa sortie 14 d'évacuation des effluents après traitement.

On obtient aussi en partie supérieure 15 de l'enceinte une zone 16 fonctionnelle, dans laquelle un mélange extrêmement turbulent animé de mouvements browniens (trait 17 interrompu) est réalisé.

En partie basse 18 du réacteur, de façon connue en elle-même, il est prévu une purge 19 des éléments trop denses qui ne s'échappent pas par le dessus du réacteur et qui est vidée séquentiellement.

A la sortie 14 du réacteur s'échappent l'air, l'eau et les boues qui après décantation, donner une eau transparente physiquement séparée de la matière solide, avec un taux de matière solide très bas, inférieur notamment à 30 mg/l voire à 10 mg/l, alors qu'initialement il pouvait avoisiner plus de 500 mg/l.

La matière solide décolloïdée obtenue à ce niveau est plus poreuse et par la suite aisément compactable. Elle peut même, en fonction de son taux de matière organique initiale, être directement peletable en sortant du réacteur.

L'air est introduit à une pression moyenne, par exemple comprise entre 1,6 bars et 1,9 bars absolu à la pression dans l'enceinte elle-même, afin qu'il puisse y avoir de grosses bulles dans le milieu, qui vont pouvoir le pénétrer et se répartir de façon aléatoire dans le réacteur pour réaliser le mélange attendu.

L'air est par ailleurs introduit à fort débit d, c'est à dire de 1,5 fois à 15 fois (en Nm³/h) celui Q_{EB} de l'eau entrant (en m³/h).

Le gaz extrait du réacteur sort avec l'eau et la boue au débit du surpresseur et peut être récupéré, traité et le cas échéant recyclé pour être réutilisé en partie basse du réacteur.

A noter que la présence de matières grossières du type sable, gravier etc, augmente le nombre de chocs et améliore de ce fait le processus.

La pression de l'enceinte est quant à elle agencée et/ou réglée pour optimiser l'énergie interne en générant un flux ascensionnel sortant par le haut.

Une telle pression est donc déterminée en fonction des caractéristiques fonctionnelles du circuit (Hauteur d'eau de pompes) mais aussi du type d'effluents et des débits de traitement recherché.

La dimension finalement choisie du réacteur sera également déterminée par l'homme du métier en fonction des connaissances de base de l'ingénieur du domaine du génie chimique et du diagramme des flux.

La pression et la sortie sont par exemple assurées par le biais d'une vanne soupape qui libère le flux lorsque la pression donnée est dépassée.

Comme le procédé selon l'invention met en oeuvre une agitation en trois phases, solide, liquide et gazeuse, il est nécessaire en sortie, de mettre une séparation tenant compte du dégazage, de la phase solide plus dense que l'eau et de l'évacuation de l'eau.

Dans un mode de réalisation avantageux on additionne de plus un coagulant (exemple chaux, chlorure ferrique).

Cette addition complémentaire se fait par exemple dans la zone fonctionnelle 16.

Ainsi avec un réacteur de 55 litres le diamètre et des buses d'injection dans ce réacteur de 40 mm de diamètre, on peut traiter jusqu'à 20 m³/h de boue.

De façon étonnante, on observe par ailleurs avec le procédé de l'invention que lorsque la pression dans le réacteur est supérieure en pression relative à 0,8 bars, que le débit d'alimentation Q_{EB} des eaux boueuses par exemple formé par des boues d'épandage chargées en MES à 5%, lesdits MES étant issus de la dégradation biologique d'herbe de marais, d'argile, de sable et de résidus pétroliers divers à l'état de traces (< 1 ‰) est supérieur à 15 m³/h et que le débit d'air d est supérieur à 25 m³/h, on obtient une séparation exceptionnelle, avec une vitesse de décantation maximale d'une boue qui présente après séchage un aspect poreux granuleux nouveau.

Avec un réacteur de 55 litres et des buses d'injection de l'effluent à l'intérieur de 40mm, on obtient des valeurs de vitesse de percussion extrêmement rapides et des temps de séjour dans le réacteur qui sont particulièrement courts [cf. tableau I ci-après].

**TABLEAU I**

| | m³/h | | | | | | | | | |
|---|---|---|---|---|---|---|---|---|---|---|
| Débit d'effluent | 1 | 2 | 3 | 4 | 5 | 6 | 7 | 10 | 15 | 20 |
| | m/s | | | | | | | | | |
| Vitesse percussion particules solides | 0,111 | 0,221 | 0,332 | 0,442 | 0,553 | 0,774 | 1,105 | 1,658 | 2,210 | |

| | s | | | | | | | | | |
|---|---|---|---|---|---|---|---|---|---|---|
| Temps séjour réacteur | 198,00 | 99,00 | 66,00 | 49,50 | 39,60 | 28,29 | 19,80 | 14,85 | 9,9 | |

Grâce à l'invention il est donc possible d'obtenir une déshydratation poussée bien supérieure à celle obtenue grâce aux techniques existantes et ce en quelques secondes.

A titre d'exemple on a fait figurer sur le tableau II ci-après, l'amélioration Δ en siccité, obtenue avec le procédé selon l'invention pour une boue de station d'épuration industrielle de Fos sur Mer, peu minéralisée (90% de matière organique) dans le domaine de la pétrochimie.

La comparaison est faite entre un simple traitement sur filtre bande (toile filtrante sur laquelle l'eau et la boue sont déversées par pompage et véhiculées entre des rouleaux d'essorage), et le même filtre bande après prétraitement avec le procédé selon l'invention.

Pour un volume d'enceinte v = 551, on a fait varier les paramètres de débit de boue Q_{EB} (m³/h) de débit de gaz d(Nm³/h), la pression relative P à l'intérieur de l'enceinte (bars), pour une charge en MS déterminée à l'entrée de l'enceinte (en g/l).

Les résultats sont par ailleurs donnés en fonction de l'état initial des boues i.e. fraîche (sans décantation) peu fraîche (après décantation d'une journée) ou fermentée (plusieurs jours de décantation en absence d'oxygène).

On voit qu'un fort débit de gaz (huit fois le débit de boue) et une forte pression dans l'enceinte (1,3 bars) améliore de 48,8% la siccité (essai N°10) pour une charge assez faible initiale (MS de 8,2 g/l).

En moyenne (voir essais N°13 à 16) une boue fraîche chargée à 32,4 g/l pour un débit de gaz vingt fois supérieur à celui des boues, et une pression de 1 bar relatif dans l'enceinte, le procédé selon l'invention améliore la siccité (Taux de Matière Sèche (MS) en poids par rapport au poids total de la boue i.e. : MS + liquide) de 24 à 36,4 % soit en moyenne 30%.

**TABLEAU II**

| **Essais N°** | **Type Boue industrielles Fos sur Mer** | **Débit** | | **Pression Enceinte** | **Entrée** | Δ Siccité | Sortie |
|---|---|---|---|---|---|---|---|
| | | | | **P** | | | |
| | | **Q_{EB} Boue** | **d Gaz** | | **MS** | | |
| | | **m3/h** | **Nm3/h** | **Bar** | **g/l** | % | % |
| 1 | peu fraîche | **2,8** | **40** | 0,5 | **24** | | 14,7 |
| 2 | peu fraîche | **2** | **50** | 0,8 | **24** | | 20 |
| 3 | peu fraîche | **3** | **60** | 1,4 | **28** | | 35,5 |
| 4 | peu fraîche | **2** | **60** | 1 | **26** | | 22,1 |
| 5 | peu fraîche | **2** | **60** | 1 | **26** | | 21,1 |
| 6 | peu fraîche | **2** | **60** | 1 | **26** | | 20,4 |
| 7 | fraîche | **1,5** | **60** | 1,1 | **26** | | 26,6 |
| 8 | fraîche | **1,3** | **60** | 1 | **26** | | 22,2 |
| 9 | fraîche | **1,2** | **60** | 0,8 | **26** | | 24,4 |
| 10 | fermentée | **8** | **60** | 1,3 | **8,2** | | 48,8 |
| 11 | fermentée | **6,2** | **60** | 1,1 | **11** | | 32 |
| 12 | fermentée | **3** | **70** | 0,8 | **24** | | 26,2 |
| 13 | fraîche | **3** | **60** | 1 | **32,4** | | 24 |
| 14 | fraîche | **3** | **60** | 1 | **32,4** | | 26 |
| 15 | fraîche | **3** | **60** | 1 | **32,4** | | 36,4 |
| 16 | fraîche | **3** | **60** | 1 | **32,4** | | 30,1 |
| 17 | fraîche | **4,4** | **40** | 1,6 | **32,4** | | 27,2 |
| 18 | fraîche | **5,6** | **50** | 0,9 | **32,4** | | 33 |
| 19 | peu fraîche | **6,5** | **60** | 0,5 | **24** | | 28,2 |

On a ensuite représenté sur le Tableau III, un exemple de résultats obtenus avec un dispositif seul (sans traitement complémentaire) sur des sédiments (boue très minéralisée) et avec un traitement complémentaire (filtre bande).

Le traitement avec l'invention seule est à comparer avec le filtre bande seul qui ne dépasse pas une amélioration de la siccité de 15 à 18 %.

D'excellents résultats sont ici obtenus même sans traitement complémentaire avec filtre ou centrifugeuse.

**TABLEAU III**

| **Essais N°** | **Type Boue industrielles Fos sur Mer** | **Débit** | | **Pression Enceinte** | **Entrée** | Δ Siccité | Sortie |
|---|---|---|---|---|---|---|---|
| | | | | **P** | | | |
| | | **Q_{EB} Boue** | **d Gaz** | | **MS** | | |
| | | **m3/h** | **Nm3/h** | **Bar** | **g/l** | % | % |
| 20 | sédiments | **1.3** | **60** | **1,1** | **130** | | 61.6 |
| 21 | sédiments | **1.2** | **60** | **1,1** | **84** | 56.7 | 69.5 |
| 22 | sédiments | **1.3** | **70** | **1** | **84** | 43.2 | 67.1 |
| | | | | | | Seul | Seul + Filtre |

En plus de ce gain de temps considérable dans le traitement, de très faible consommation électrique, d'air comprimé et/ou additifs sont nécessaires.

Le faible encombrement de l'enceinte la rend par ailleurs facilement transportable, et permet son installation dans les sites d'accès difficile, le tout en autorisant un fonctionnement en continu d'une grande simplicité.

Le traitement selon l'invention ne génère aucune pollution, et ce avec une installation beaucoup plus économique comparée aux autres systèmes de traitement envisageables pour le seul travail de séparation liquide/solide comme sont les centrifugeuses, les filtres presse, les filtres bandes etc.

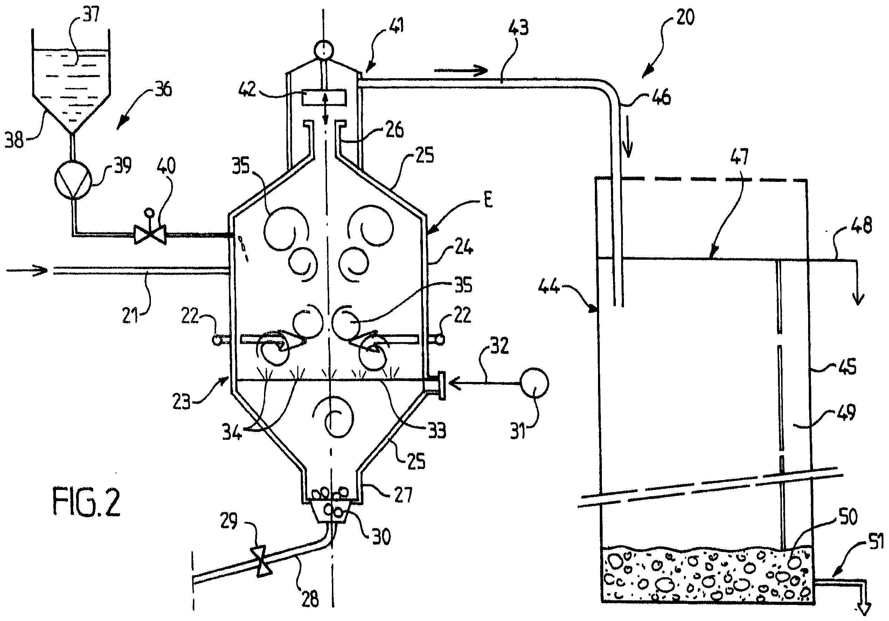

On a représenté sur la figure 2 un schéma de fonctionnement d'un dispositif 20 selon le mode de réalisation de l'invention plus particulièrement décrit ici.

Le dispositif 20 permet la séparation entre la partie liquide et la matière sèche de la boue alimentée en 21 en flux continu à un débit Q_{EB} = V/h, l'alimentation en 21 se séparant ensuite en deux pour alimenter les piquages 22.

Plus précisément le dispositif 20 comporte une enceinte E en acier inox, fermée, de volume v < V/20, par exemple de 55 litres pour un débit Q = V/h de 1,5 m³/h, comprenant au moins deux orifices identiques ou piquages 22, opposés, en vis-à-vis, situés dans la moitié inférieure 23 de l'enceinte, par exemple à une distance égale au tiers de la hauteur de l'enceinte.

L'enceinte est par exemple constituée par une partie cylindrique 24 terminée en partie haute et en partie basse par deux zones coniques identiques 25 par exemple d'angles au sommet de l'ordre de 120°.

Chaque extrémité est elle-même terminée par un tube supérieur 26, et inférieur 27. Le tube inférieur 27 est relié à une canalisation 28 d'évacuation intermittente, munie d'une vanne 29, du matériau en suspension 30 qui aurait été décanté dans le fond 27 de l'enceinte.

Le dispositif 20 comprend de plus des moyens 31 d'alimentation de l'enceinte en air 32 à un débit d en dessous des orifices 22.

Cette alimentation se fait par exemple par l'intermédiaire d'une tuyauterie rectiligne ou tube 33, de petit diamètre, par ex de 5 cm de diamètre, de longueur sensiblement égale au diamètre de l'enceinte cylindrique, comprenant des buses 34 régulièrement répartie, de sortie de l'air comprimé de façon répartie dans l'enceinte, créatrice de bulles importantes qui vont entraîner d'importants brassages (ronds 35).

Des moyens 36 connus en eux-mêmes, d'alimentation d'un réactif liquide 37, par exemple un coagulant, sont prévus. Ils sont par exemple formés d'un bac de stockage 38, alimentant par l'intermédiaire d'une pompe doseuse 39 et d'une vanne télécommandée 40, l'intérieur de l'enceinte au dessus des piquages 22, dans la zone de turbulence.

Le dispositif 20 comprend de plus des moyens 41 d'évacuation en continu du liquide ayant pénétré dans l'enceinte par l'intermédiaire d'une vanne ou soupape 42 qui s'ouvre au delà d'une pression déterminée dans l'enceinte, par exemple 1,3 bar.

Il est également possible de ne pas prévoir de vanne, le circuit en aval lui-même constituant la perte de charge nécessaire au maintien en surpression relatif de l'enceinte.

L'effluent 43 est alors évacué en partie haute pour aboutir dans un bac 44 de décantation connu en lui-même.

Par exemple, ce bac 44 de décantation est constitué par une cuve cylindrique 45 dans laquelle aboutit la tuyauterie d'évacuation 46 en dessous du niveau 47 de fonctionnement pour limiter les turbulences.

Le bac 44 se vide quant-à-lui par trop plein en 48, au travers d'une portion 49 de cuve latérale non turbulente séparée du reste de la cuve par une paroi ajourée par endroit.

La matière solide décantée 50 est évacuée en partie basse 51 pour pouvoir être traitée ultérieurement.

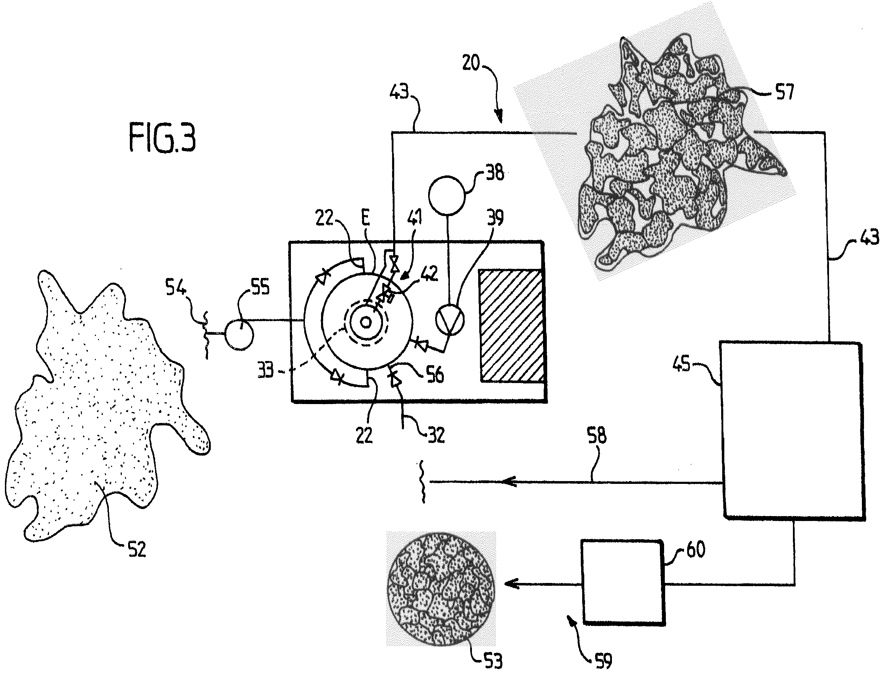

On a représenté sur la figure 3 en vue de dessus, le dispositif 20 de la figure 2 permettant d'obtenir, à partir de la boue 52, la galette 53, selon l'invention.

Dans la suite de la description on utilisera les mêmes références pour désigner les mêmes éléments.

A partir de la boue ou effluent 52 chargé en matériau en suspension, que l'on pompe dans un milieu 54 par l'intermédiaire d'une pompe 55 ayant une hauteur d'eau H₀ à un débit Q_{EB}, on alimente l'enceinte E par l'intermédiaire des deux piquages 22 situés en vis-à-vis, l'un en face de l'autre. On a donc à chaque piquage un débit divisé par deux Q_{EB}/2.

L'alimentation en air 32 se fait en dessous des piquages comme décrit ci-avant, par un piquage 56.

Un réactif (coagulant tel que chlorure ferrique ou chaux) connu en lui-même et à adapter par l'homme du métier en fonction des effluents traités, est alimenté en continu dans l'enceinte E à partir du bac 38 via la pompe doseuse 39.

Les effluents une fois traités dans l'enceinte comme décrit ci-avant, sont évacués en partie haute en 41 pour obtenir l'effluent défragmenté décolloïdé 57 comme représenté schématiquement sur la figure 3.

Cet effluent décolloïdé et défragmenté est ensuite alimenté dans le bac de décantation 45. Après une décantation qui intervient en continu en quelques secondes, on observe alors en 58 une eau extrêmement claire, par exemple laissant passer 99% de la lumière qui la traverse, voir 99,5%.

En 59, après traitement éventuel complémentaire de compactage en 60, on obtient une galette de boue particulièrement intéressante, à la fois aérée, solidifiée et présentant une excellente porosité comprise entre 5% et 15%.

Un tel produit obtenu avec le procédé selon l'invention est nouveau et va former matière à des utilisations ultérieures à titre de terreau, à titre de matière première dans la construction etc.

On va maintenant décrire en référence à la figure 3 le fonctionnement d'une épuration selon le mode de réalisation de l'invention plus particulièrement décrit ici.

A partir d'un milieu par exemple une rivière 54 chargée en boue 52, on extrait par pompage (55) cette boue.

Dans un exemple d'application le taux de boue, i.e. le pourcentage en matière massique de matière sèche, est par exemple compris entre 3 et 10%.

Cette boue alimente l'enceinte E par exemple de volume V = 100 l, à un débit compris par exemple entre 5 et 50m³/h par exemple 15m³/h.

Comme décrit ci-avant, cet effluent est injecté dans le réacteur par les deux piquages 22 en vis-à-vis. Simultanément on alimente en air par la rampe inférieure 33 du réacteur avec un débit supérieur par exemple à 25 Nm³/h.

La pression à l'intérieur de ce dernier est comprise entre 0,3 et 1,5 bars relatif, par exemple supérieure à 0,8 bars relatif, en fonction de la hauteur d'eau de la pompe et/ou des pompes d'alimentation des effluents, ainsi que de la perte de charge créée par l'enceinte elle-même et par la vanne d'évacuation 42 située en partie haute de ladite enceinte.

La pression à l'intérieur du réacteur peut notamment être régulée par l'intermédiaire de cette vanne supérieure ou soupape.

L'effluent ainsi brassé et alimenté en air, reste dans le réacteur pendant une période correspondant au rapport relatif entre les débits, le volume et la pression.

Il est donc conservé par exemple pendant un temps de séjour de quelques secondes, par exemple inférieur à 1mn avant d'être évacué.

Ce temps peut même être très inférieur puisqu'avec un débit d'effluent supérieur à 20m³/h on peut par exemple rester dans l'enceinte un temps inférieur à 10 secondes.

Le débit d'alimentation en boue a quant à lui une action directe sur la vitesse de percussion suivant le tableau produit ci-avant, sachant que le temps de contact et de séjour dans le réacteur sous pression joue également sur la vitesse de formation des flocs et de leur décantation.

Le débit d'air et l'influence de la pression dans le réacteur sont par ailleurs des éléments qui, au vue du résultat recherché, vont être adaptés, de façon à la portée de l'homme du métier.

Une fois les boues traitées, elles sortent du réacteur à une pression correspondant à la pression d'écoulement du débit du fluide dans le tuyau 43, au bac de décantation 45, dans lequel la décantation va s'effectuer de façon connue en elle-même.

L'eau obtenue en surnageant est d'une grande pureté et elle est évacuée elle-même en continu en 58.

La boue obtenue en partie basse du bac de décantation est elle, évacuée soit en continu, soit sous forme discontinue, selon des périodes déterminées, par exemple une fois par jour.

Le fait de réévacuer cette boue très vite augmente sa qualité notamment en ce qui concerne sa bonne porosité.

Le traitement opéré grâce au procédé et réacteur selon l'invention permet ainsi d'obtenir un gâteau poreux et déshydraté, la boue récupérée étant vide, sèche et manipulable. Quelques heures suffisent contre trois mois dans le cadre d'une utilisation dite de séchage classique, pour obtenir un résultat comparable, et encore les caractéristiques de la boue obtenue étant bien meilleures avec l'invention car plus facilement recyclable.

Comme il va de soi et comme il résulte également de ce qui précède, la présente invention n'est pas limitée aux modes de réalisation plus particulièrement décrits. Elle en embrasse au contraire toutes les variantes et notamment celles où les orifices peuvent être des ajutages, des tubes pénétrant à l'intérieur de l'enceinte pour minimiser la distance entre les sorties et augmenter la force des chocs.

## Revendications

1. Procédé de séparation entre la partie liquide et les matières en suspension d'une boue alimentées en flux continu à un débit Q_{EB} = V/heure, V étant un volume, dans lequel on injecte de l'air à un débit d, **caractérisé en ce que** le débit d > 1,5 Q_{EB}, **en ce que** on introduit et on fait passer le flux en pression dans une enceinte fermée de volume v < V/20, sans recirculation en boucle des effluents à l'intérieur de l'enceinte, l'air étant injecté dans l'enceinte maintenue à une pression supérieure à la valeur de 0,3 bar relatif, ladite enceinte étant alimentée et évacuée en continu au même débit ou sensiblement au même débit d'entrée et de sortie en continu de l'effluent, puis on filtre ou on laisse décanter les matières en suspension du flux ainsi traité dans un récipient de récupération.

2. Procédé selon la revendication 1, **caractérisé en ce que** on conserve le flux dans l'enceinte pendant un temps inférieur à 1 minute, avant d'être évacué.

3. Procédé selon la revendication 2, **caractérisé en ce que** le temps est inférieur à 10 s.

4. Procédé selon l'une quelconque des revendications précédentes, **caractérisé en ce que** l'air est injecté à un débit d supérieur à 5 Q_{EB}.

5. Procédé selon l'une quelconque des revendications précédentes, caractérisé en ce on introduit l'air légèrement compressé dans l'enceinte, on introduit les flux liquides là où on effectue des chocs hydrauliques, on effectue un très fort brassage air/flux liquide par l'apport d'air, et on décompresse à la sortie de l'enceinte.

6. Procédé selon la revendication 5, **caractérisé en ce que** on règle la décompression à la sortie par une vanne permettant de maintenir l'enceinte à une pression relative de 0,5 à 2 bars environ.

7. Procédé selon l'une quelconque des revendications précédentes, **caractérisé en ce que** v ≤ V/50.

8. Procédé selon la revendication 7, **caractérisé en ce que** v ≤ V/100.

9. Procédé selon l'une quelconque des revendications précédentes, **caractérisé en ce que** le débit Q_{EB} est supérieur ou égal à 15 m3/h, le débit d est supérieur ou égal à 25 m3/h et **en ce que** la pression relative dans l'enceinte est supérieure ou égale à 0,8 bar.

10. Procédé selon la revendication 9, **caractérisé en ce que** le débit Q_{EB} est supérieur ou égal à 20 m3/h, le débit d est supérieur ou égal à 50 m3/h et la pression relative dans l'enceinte est supérieure à 1,2 bar.

11. Procédé selon l'une quelconque des revendications précédentes, **caractérisé en ce qu'**aucun floculant n'est ajouté en amont et/ou dans l'enceinte.

12. Procédé selon l'une quelconque des revendications précédentes, **caractérisé en ce que** le gâteau obtenu est récupéré et déshydraté par séchage, pressage ou centrifugeage pour obtenir une galette solidifiée.

## Patentansprüche

1. Verfahren zur Trennung des flüssigen Anteils von den Schwebstoffen in einem Schlamm, der in einem kontinuierlichen Fluss mit einem Durchfluss von Q_{EB} = V/Stunde eingespeist wird, wobei V ein Volumen ist, das mit Luft mit einem Durchfluss d beaufschlagt wird,
**dadurch gekennzeichnet,**
**dass** der Durchfluss d > 1,5 Q_{EB} ist, **dass** der Fluss unter Druck in einen geschlossenen Raum mit einem Volumen v < V/20 ohne Kreisumwälzung der Ausströmungen innerhalb des Raums eingeleitet und durchgeführt wird, wobei die Luft in den Raum eingespeist wird, der unter einem den Wert von 0,3 bar (relativ) übersteigenden Druck gehalten wird, wobei der Raum mit dem gleichen oder im Wesentlichen gleichen kontinuierlichen Eingangsdurchfluss und Ausgangsdurchfluss der Ausströmung kontinuierlich beaufschlagt und geleert wird, und dass danach eine Filtration erfolgt und die Schwebstoffe des derart behandelten Flusses sich in einem Auffangbehälter absetzen.

2. Verfahren nach Anspruch 1,
**dadurch gekennzeichnet,**
**dass** der Fluss vor Ableitung während einer Zeitdauer von weniger als 1 Minute in dem Raum verbleibt.

3. Verfahren nach Anspruch 2,
**dadurch gekennzeichnet,**
**dass** die Zeitdauer geringer als 10 s ist.

4. Verfahren nach einem der vorhergehenden Ansprüche,
**dadurch gekennzeichnet,**
**dass** die Luft mit einem Durchfluss d > 5 Q_{EB} eingespeist wird.

5. Verfahren nach einem der vorhergehenden Ansprüche,
**dadurch gekennzeichnet,**
**dass** die leicht komprimierte Luft in den Raum eingespeist wird, die flüssigen Flüsse dort eingeleitet werden, wo hydraulische Stöße stattfinden, die Luft und der flüssige Fluss durch Luftzufuhr kräftig umgewälzt werden und eine Dekompression am Austritt des Raums erfolgt.

6. Verfahren nach Anspruch 5,
**dadurch gekennzeichnet,**
**dass** die Dekompression am Austritt durch ein Ventil eingestellt wird, durch das der Raum unter einem Druck von ca. 0,5 bis 2 bar (relativ) gehalten werden kann.

7. Verfahren nach einem der vorhergehenden Ansprüche,
**dadurch gekennzeichnet,**
**dass** v ≤ V/50.

8. Verfahren nach Anspruch 7,
**dadurch gekennzeichnet,**
**dass** v ≤ V/100.

9. Verfahren nach einem der vorhergehenden Ansprüche,
**dadurch gekennzeichnet,**
**dass** der Durchfluss Q_{EB} größer oder gleich 15 m³/h, der Durchfluss d größer oder gleich 25 m³/h und dass der relative Druck in dem Raum größer oder gleich 0,8 bar ist.

10. Verfahren Anspruch 9,
**dadurch gekennzeichnet,**
**dass** der Durchfluss Q_{EB} größer oder gleich 20 m³/h, der Durchfluss d größer oder gleich 50 m³/h und dass der relative Druck in dem Raum größer oder gleich 1,2 bar ist.

11. Verfahren nach einem der vorhergehenden Ansprüche,
**dadurch gekennzeichnet,**
**dass** vor und/oder in dem Raum kein Flockungsmittel zugesetzt wird.

12. Verfahren nach einem der vorhergehenden Ansprüche,
**dadurch gekennzeichnet,**
**dass** der gewonnene Kuchen aufbereitet und durch Trocknen, Pressen oder Zentrifugieren getrocknet wird, um einen verfestigten Kuchen zu gewinnen.

## Claims

1. Method of separating the liquid part from the materials in suspension of a sludge fed in a continuous stream at a flow rate Q_{EB} = V/hour, V being a volume, in which air is injected at a flow rate d, **characterised in that** the flow rate d > 1.5 Q_{EB}, **in that** the stream is introduced and passed under pressure into a closed enclosure of volume v < V/20, without recirculation of the effluents inside the enclosure in a loop, the air being injected into the enclosure maintained at a pressure greater than the value of 0.3 bar relative, said enclosure being fed and evacuated continuously at the same flow rate or substantially at the same continuous effluent inlet and outlet flow rate, then the substances in suspension of the stream so treated are filtered or decanted into a recovery container.

2. Method according to claim 1, **characterised in that** the stream is retained in the enclosure for a time of less than 1 minute, before being evacuated.

3. Method according to claim 2, **characterised in that** the time is less than 10 s.

4. Method according to any one of the preceding claims, **characterised in that** the air is injected at a flow rate d greater than 5 Q_{EB}.

5. Method according to any one of the preceding claims, **characterised in that** the air is introduced into the enclosure slightly compressed, the liquid streams are introduced where hydraulic shocks are applied, very strong mixing of the air/liquid stream is carried out by the addition of air, and decompression is carried out at the outlet of the enclosure.

6. Method according to claim 5, **characterised in that** the decompression at the outlet is regulated by a valve allowing the enclosure to be maintained at a relative pressure of about 0.5 to 2 bars.

7. Method according to any one of the preceding claims, **characterised in that** v ≤ V/50.

8. Method according to claim 7, **characterised in that** v ≤ V/100.

9. Method according to any one of the preceding claims, **characterised in that** the flow rate Q_{EB} is greater than or equal to 15 m3/h, the flow rate d is greater than or equal to 25 m3/h and **in that** the relative pressure in the enclosure is greater than or equal to 0.8 bar.

10. Method according to claim 9, **characterised in that** the flow rate Q_{EB} is greater than or equal to 20 m3/h, the flow rate d is greater than or equal to 50 m3/h and the relative pressure in the enclosure is greater than 1.2 bar.

11. Method according to any one of the preceding claims, **characterised in that** no flocculating agent is added upstream and/or in the enclosure.

12. Method according to any one of the preceding claims, **characterised in that** the cake obtained is recovered and dehydrated by drying, pressing or centrifuging in order to obtain a solidified disk.
